# EUROPEAN PATENT APPLICATION

(11) **EP 4 465 426 A1**
(43) Date of publication of application: **20.11.2024**
(21) Application number: 24170856.9
(22) Date of filing: 17.04.2024
(51) Int. Cl.: H01M 50/209, H01M 50/251, H01M 50/258

(54) **ENERGY STORAGE DEVICE AND ENERGY STORAGE SYSTEM INCLUDING THE SAME**

(30) Priority: 19.05.2023 KR 20230065147
(71) Applicant: SK On Co., Ltd., Seoul 03161 (KR)
(72) Inventor: JUNG, Jae Won, 34124 Daejeon (KR); PARK, Byung Jun, 34124 Daejeon (KR); PARK, Sin Ho, 34124 Daejeon (KR); PARK, Chan Ho, 34124 Daejeon (KR); BAEK, Moo Han, 34124 Daejeon (KR)
(74) Representative: Prüfer & Partner mbB Patentanwälte · Rechtsanwälte

(57) **Abstract**

An energy storage device includes a housing having an internal space; a plurality of battery modules accommodated in the internal space; a mounting portion disposed in the housing and on which the plurality of battery modules are mounted; a door member coupled to the housing to be openable and closable; and at least one connecting portion of which at least a portion is exposed to the outside of the housing and electrically connected to the plurality of battery modules.

## Description

### BACKGROUND

### 1. FIELD

Embodiments of the present disclosure relate to an energy storage device and an energy storage system including the same.

### 2. DESCRIPTION OF RELATED ART

An energy storage system (ESS) is a device or system storing power that has already been produced and supplying the stored power when the power is necessary to improve the overall power use efficiency.

As the demand for such an ESS increases, technology capable of quickly manufacturing and supplying the ESS is required.

In particular, there is a need for the ESS to have a movable structure in order to quickly install the ESS where it is needed or to quickly expand the ESS as the required power value increases.

In addition, to quickly implement such an ESS, a connection structure capable of quickly and reliably connecting individual energy storage devices constituting the ESS is required.

### SUMMARY

Embodiments of the present disclosure provide an energy storage device that is modularized to be transported in a completely manufactured state and is capable of quickly implementing a large capacity of an energy source at an installation destination, and an energy storage system (ESS) including the same.

Embodiments of the present disclosure also provide an ESS having a structure capable of quickly and stably connecting energy storage devices to each other.

According to embodiments of the present disclosure, an energy storage device includes a housing having an internal space; a plurality of battery modules accommodated in the internal space; a mounting portion disposed in the housing and on which the plurality of battery modules are mounted; a door member coupled to the housing to be openable and closable; and at least one connecting portion of which at least a portion is exposed to the outside of the housing and electrically connected to the plurality of battery modules.

The at least one connecting portion may include a busbar electrically connected to the plurality of battery modules; and an insulating member coupled to the housing and supporting the busbar.

The busbar may have a state in which one end thereof is inserted into an inside of the housing and the other end, opposite to the one end, is exposed to the outside of the housing.

The mounting portion may be configured to allow the plurality of battery modules to be inserted in a first direction, and the busbar may protrude outwardly from the housing in a second direction, perpendicular to the first direction.

The at least one connecting portion may include a first connecting portion and a second connecting portion respectively disposed on opposite surfaces of the housing, and the energy storage device may further include an internal connection member disposed inside the housing and electrically connecting the first connecting portion and the second connecting portion to each other.

The housing may further include a partition partitioning the internal space, and the plurality of battery modules are arranged in a height direction of the housing on both sides of the partition, and the energy storage device may further include a plurality of fixing members coupled to the housing and the plurality of battery modules to prevent the plurality of battery modules from being separated from the mounting portion, and a plurality of lifting holes provided in the housing and configured to allow a transport portion to be inserted.

The plurality of lifting holes may include a plurality of first lifting holes disposed at corners of the housing; and a plurality of second lifting holes disposed in a bottom portion of the housing.

The energy storage device may further include an internal frame disposed on top portions of the plurality of battery modules; and a battery control system disposed between the internal frame and the housing.

At least a portion of the connecting portion may be disposed between the internal frame and the housing.

The energy storage device may further include a cooling device disposed in the door member and configured to supply a cooling medium to the internal space.

The at least one connecting portion may include a first connection member and a second connection member arranged spaced apart from each other, the first connection member may be a high voltage terminal electrically connected to the plurality of battery modules, and the second connection member may be a low voltage terminal electrically connected to a battery control system configured to control the plurality of battery modules.

According to embodiments of the present disclosure, an energy storage system (ESS) includes a plurality of energy storage devices respectively including a plurality of battery modules; and at least one connection member electrically connecting the plurality of energy storage devices to each other, wherein at least one of the plurality of energy storage devices includes a housing having a mounting portion on which the plurality of battery modules are mounted; a door member coupled to the housing to be openable and closable; and at least one connecting portion of which at least a portion is exposed to the outside of the housing and electrically connected to the plurality of battery modules.

The at least one connecting portion may include a busbar electrically connected to the plurality of battery modules and protruding outwardly from the housing, and the connection member may be respectively connected to busbars of two neighboring energy storage devices.

The plurality of energy storage devices may include a first energy storage device and a second energy storage device arranged side by side in one direction, and a connecting portion of the first energy storage device and a connecting portion of the second energy storage device may face each other in the one direction.

At least one of the plurality of energy storage devices may further include a battery control system configured to control the plurality of battery modules, and the at least one connecting portion may include a high voltage terminal electrically connected to the plurality of battery modules and a low voltage terminal electrically connected to the battery control system.

### BRIEF DESCRIPTION OF DRAWINGS

The above and other aspects, features, and advantages of the embodiments of the present disclosure will be more clearly understood from the following detailed description taken in conjunction with the accompanying drawings, in which:
FIG. 1 shows a configuration of an energy storage system (ESS) according to an embodiment of the present disclosure;
FIG. 2 is a perspective view of a door member of an energy storage device in an open state according to an embodiment of the present disclosure;
FIG. 3 is a perspective view of a battery module according to an embodiment of the present disclosure;
FIG. 4 shows the battery module which is to be inserted into an internal space of the energy storage device according to an embodiment of the present disclosure;
FIG. 5 shows a guide portion and a fixing member of the energy storage device which are coupled to each other according to an embodiment of the present disclosure;
FIG. 6 is a partial enlarged view of a connecting portion of the energy storage device showing first connection members and insulating member of the connection portion according to an embodiment of the present disclosure;
FIG. 7 shows a top portion of an internal frame in the energy storage device according to an embodiment of the present disclosure;
FIG. 8 shows a plurality of energy storage devices electrically connected to each other according to an embodiment of the present disclosure;
FIG. 9 shows a cooling medium which is circulated inside the energy storage device according to an embodiment of the present disclosure;
FIG. 10 is a perspective view of the energy storage device according to an embodiment of the present disclosure; and
FIG. 11 is a perspective view of the energy storage device according to an embodiment of the present disclosure.

### DETAILED DESCRIPTION

Prior to the detailed description of the embodiments of the present disclosure, the terms or words used in the specification and claims should not be construed as limited to ordinary or dictionary meanings, and should be interpreted as having a meaning and concept consistent with the technical idea of the present disclosure based on the principle that the inventor may appropriately define the concept of the terms or words to describe his/her invention in the best way.

The same reference numerals or symbols in each drawing attached to the specification indicate parts or components that perform substantially the same function. For convenience of description and understanding, even different embodiments may be described using the same reference numerals or symbols. That is, even if components having the same reference number are shown in a plurality of drawings, the plurality of drawings do not all represent one embodiment.

In the following description, singular expressions include plural expressions unless the context clearly dictates otherwise. It should be understood that terms such as "include" or "comprise" are intended to designate the presence of features, numbers, steps, operations, components, parts, or combinations thereof described in the specification, and do not exclude in advance the possibility of the presence or addition of one or more other features or numbers, steps, operations, components, parts, or combinations thereof.

In addition, in the following description, expressions such as top portion, bottomportion, side surface, front surface, rear surface, etc. are expressed based on the direction shown in the drawing, and it should be noted in advance that when the direction of the corresponding object is changed, expressions may be expressed differently.

In addition, in the specification and claims, terms including ordinal numbers such as "first", "second", etc. may be used to distinguish components. These ordinal numbers are used to distinguish identical or similar components from each other, and the meaning of the term should not be interpreted limitedly due to the use of these ordinal numbers. For example, a component combined with the ordinal number should not be interpreted as limiting the order of use or arrangement by the number. If necessary, the ordinal numbers may be used interchangeably.

Hereinafter, embodiments of the present disclosure will be described with reference to the attached drawings. However, the spirit of the present disclosure is not limited to the presented embodiments of the present disclosure. For example, a person skilled in the art who understands the spirit of the present disclosure may suggest other embodiments that are included within the scope of the spirit of the present disclosure through addition, change, or deletion of components, but this may be also included within the scope of the spirit of the present disclosure. The shapes and sizes of components in the drawings may be exaggerated for clearer description.

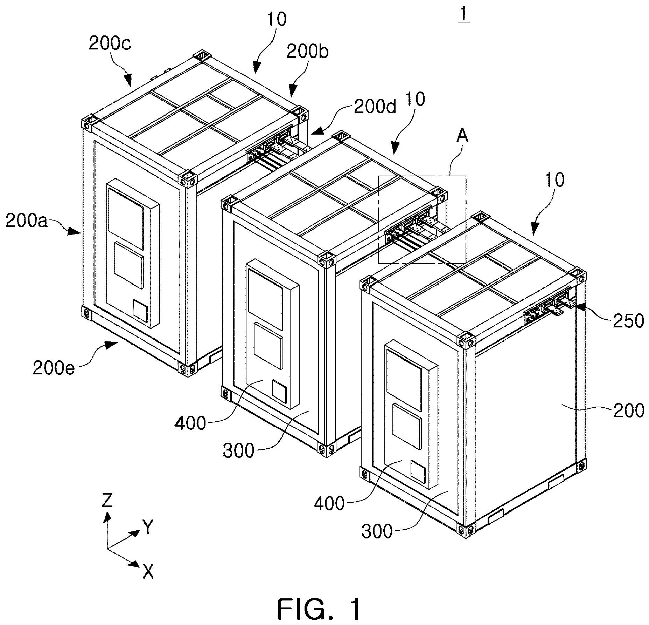

FIG. 1 shows a configuration of an energy storage system (ESS) 1 according to an embodiment of the present disclosure.

The ESS 1 according to embodiments may include a plurality of energy storage devices 10 electrically connected to each other.

The energy storage device 10 is an energy source and may be used for home or industrial purposes. The plurality of energy storage devices 10 may be electrically connected to each other as shown in FIG. 1 to form the ESS 1.

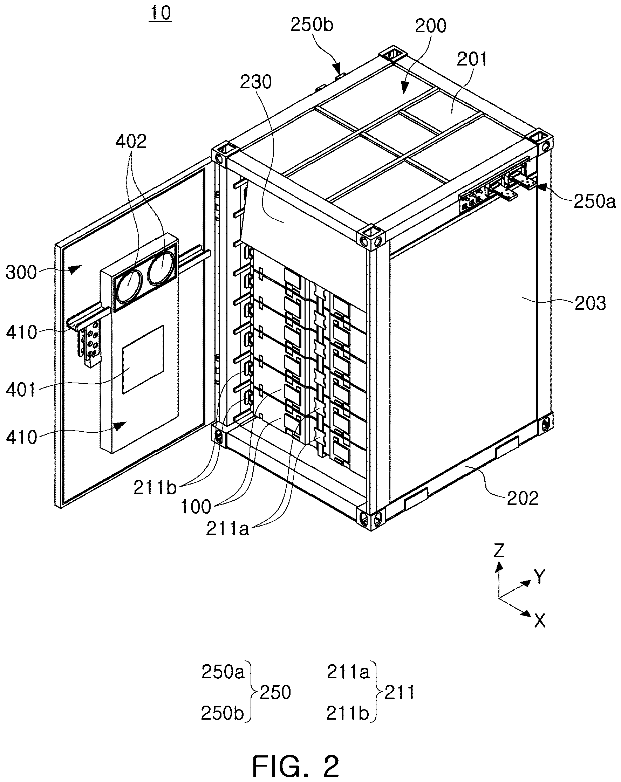

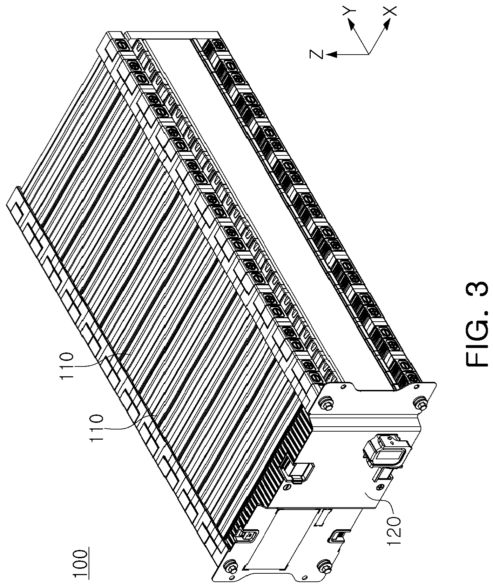

The energy storage device 10 may include a housing 200 in which at least one battery module (e.g., 100 in FIGS. 2 and 3) is accommodated, and a door member 300 coupled to the housing 200 to be openable and closable. In the illustrated embodiment, the housing 200 of the storage energy device 10 may accommodate a plurality of battery modules 100.

A cooling device 400 may be disposed in the door member 300. For example, the cooling device 400 may be configured to supply a cooling medium to the inside of the housing 200. As another example, the cooling device 400 may suction the cooling medium inside the housing 200. The cooling medium may include a fluid (gas or liquid) that may cool an internal space of the housing 200 and components (e.g., the battery modules (100 in FIG. 2)) disposed in the internal space.

For example, the cooling device 400 may include an air conditioning device capable of adjusting the temperature, humidity, etc. of the internal space of the housing 200 so that the battery module (100 in FIG. 2) may operate in an appropriate environment.

According to some embodiments, each energy storage device 10 may include at least one cooling device 400. For example, as shown in FIG. 1, the cooling device 400 may be disposed in the housing 200 of the energy storage device 10.

As such, the cooling device 400 is disposed in each energy storage device 10, and thus, independent cooling is possible for each energy storage device 10. For example, when an event (e.g., a phenomenon where a temperature inside or outside the battery module increases above a safe temperature) occurs in one of the plurality of energy storage devices 10, the cooling device 400 of the corresponding energy storage device 10 may supply the cooling medium at a higher output, thereby quickly controlling the event. Hence, having a cooling device 400 individually in each of the energy storage devices 10 allows faster and better temperature control of each energy storage device 10 and may prevent overheating of the energy storage device 10 more efficiently.

The output of the cooling device 400 may be adjusted in various ways in response to the temperature of each energy storage device 10, and thus, the cooling efficiency of the entire ESS 1 including the plurality of energy storage devices 10 may increase.

The energy storage device 10 according to embodiments of the present disclosure may be configured to be movable. For example, the energy storage device 10 may be manufactured as a finished product with the battery module (e.g., 100 in FIG. 2) accommodated and fixed inside, and then moved to an installation location by a transport device (e.g., a forklift or a crane, etc.)

Accordingly, the plurality of energy storage devices 10 may be repeatedly manufactured in a factory, transported to the installation location by a required quantity, and electrically connected to each other, thereby quickly implementing an energy source having a capacity desired by a user.

The plurality of energy storage devices 10 may be electrically connected to each other through at least one connecting portion. For example, referring to FIG. 1, the at least one connecting portion may be exposed on one side of the housing 200 of one energy storage device 10, and may be connected to the at least one connecting portion of another neighboring energy storage device 10. As such, the plurality of energy storage devices 10 may be electrically connected to each other to implement a large capacity energy source.

Hereinafter, the configuration of the energy storage device 10 will be described with reference to FIGS. 2 and 3.

FIG. 2 is a perspective view of an energy storage device 10 with door member 300 of the energy storage device 10 in an open state according to an embodiment of the present disclosure. FIG. 3 is a perspective view of battery module 100 according to an embodiment of the present disclosure.

The energy storage device 10 and the battery module 100 described with reference to FIGS. 2 and 3 correspond to the energy storage device 10 and battery module 100 of FIG. 1, and thus, redundant descriptions thereof may be omitted.

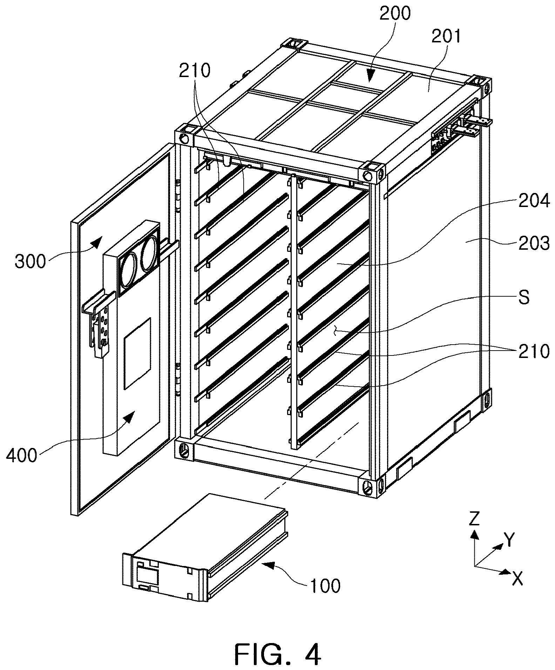

The energy storage device 10 may include the housing 200 having an internal space in which the plurality of battery modules 100 are accommodated, a mounting portion 210 disposed inside the housing 200 (please see FIG. 4) and configured to accommodate the battery module 100, and the door member 300 coupled to the housing 200 to be openable and closable.

Referring to FIG. 3, the battery module 100 may include one or more battery cells 110 capable of charging and discharging and be configured to store or discharge electrical energy. For example, the battery cells 110 included in the battery module 100 may be at least one of a pouch-type secondary battery, a cylindrical secondary battery, and a prismatic secondary battery.

Referring to FIG. 3, in the battery module 100, the battery cells 110 may be stacked and arranged in one direction, e.g., in a Y-axis direction. However, the stacking direction shown in FIG. 3 is only an example, and the stacking direction of the battery cells 110 in the battery module 100 may be set in various ways. For example, the battery cells 110 of the battery module 100 may be stacked in an X-axis direction or a Z-axis direction.

The battery module 100 may further include a module cover 120 that supports the stacked battery cells 110. For example, as shown in FIG. 3, the module cover 120 may be configured to cover at least some of a front surface, a rear surface (surface perpendicular to the Y-axis), and a side surface (surface perpendicular to the X-axis) of a stack structure in which the battery cells 110 are stacked. In this case, a top surface and a bottom surface (surface perpendicular to the Z axis) of the battery cell 110 or a cooling plate surrounding at least a portion of the battery cell 110 may have a state exposed to the outside of the battery module 100. For example, the cooling plate may be configured to surround at least a portion of the battery cell 110 and contact the battery cell 110 to protect the battery cell 110 from external impact and simultaneously discharge heat generated from the battery cell 110 to the outside of the battery module 100.

Referring to FIG. 2, inside the housing 200, the plurality of battery modules 100 may be stacked and arranged in one direction with a certain distance. For example, referring to FIG. 2, the battery modules 100 may be inserted into the housing 200 in a first direction (Y-axis direction) and stacked and arranged in a second direction (Z-axis direction) perpendicular to the first direction (Y-axis direction).

The battery modules 100 may be arranged in two columns inside the housing 200 as shown in FIG. 2, but this is only an example. In another examples, the battery modules may be arranged in one column or three or more columns.

The housing 200 may be a structure in which the battery module 100 may be accommodated.

The housing 200 may be provided as a box-shaped member in which a top frame 201, a bottom frame 202, and a plurality of side frames 203 are coupled to each other.

At least one side of the housing 200 may be open, and the battery module 100 may be configured to be inserted through the open one side. FIG. 2 shows that the housing 200 is in the shape of a hexahedron with one side open, but this is only an example, and a specific shape of the housing 200 may be appropriately changed according to a user's needs.

The housing 200 may include a material having a certain rigidity. For example, the housing 200 may include a metal material such as iron, aluminum, or stainless steel. However, in addition to metal, the housing 200 may include any material as long as a material has rigidity enough to maintain an outer shape of the housing 200 and protect the battery modules 100 inside the housing 200. For example, the housing 200 may have shape of a cube or rectangular prism.

The door member 300 may be coupled to the open one side of the housing 200 to be openable and closable. For example, the door member 300 may be hinged to the open one side of the housing 200 so that a user may push or pull the door member 300 to open or close the door member 300.

The energy storage device 10 may include a connecting portion 250 used for electrical connection with other neighboring energy storage devices 10. For example, the connecting portion 250 may include a bar-type member made of a conductive material (e.g., metal) and have a state exposed to an external environment on one side of the housing 200.

The connecting portions 250 may electrically connect the plurality of battery modules 100 disposed inside the housing 200.

The connecting portion 250 of each energy storage device 10 may include a first connecting portion 250a and a second connecting portion 250b disposed on opposite sides of the housing 200. For example, referring to FIG. 2, the first connecting portion 250a may be disposed on a first side frame 203 of the housing 200, and the second connecting portion 250b may be disposed on a second side frame 203 opposite to the first side frame 203 of the housing 200.

The first and second connecting portions 250a and 250b may have structures that are symmetrical to each other.

The energy storage device 10 may be electrically connected to other energy storage devices disposed on both sides of the energy storage device 10 through the first connecting portion 250a and the second connecting portion 250b.

The battery module 100 may be mounted on the mounting portion 210 disposed inside the housing 200. For example, the mounting portion 210 may be provided in the shape of a shelf or a rail extending in one direction (e.g., Y-axis direction) on an inner surface of the housing 200, and the battery module 100 may be inserted into the housing 200 in an extension direction of the shelf or the rail and then fixed to the inside of the housing 200.

However, a specific shape of the mounting portion 210 is not limited to that shown in FIG. 4. The mounting portion 210 may be configured in any shape or structure capable of stably mounting the battery module 100 inside the housing 200.

The battery module 100 may be coupled to a fixing member 211 and fixed to the inside of the housing 200 while being mounted on the mounting portion 210. A part of the fixing member 211 may be coupled to the battery module 100, and the other part thereof may be coupled to the housing 200. For example, the fixing member 211 may be a bracket that is mechanically fastened to the battery module 100.

The fixing member 211 may include a first fixing member 211a and a second fixing member 211b fastened to different parts of the battery module 100. For example, referring to FIG. 2, the first fixing member 211a and the second fixing member 211b may be coupled to both sides of one battery module 100.

The energy storage device 10 may further include the cooling device 400 capable of cooling the battery module 100 accommodated inside the housing 200. For example, referring to FIG. 2, the cooling device 400 may be coupled to the door member 300.

The cooling device 400 may discharge a cooling medium (e.g., cooling air) into an internal space of the housing 200 to cool the battery module 100.

The cooling device 400 may include a discharge portion 401 through which the cooling medium is discharged, and a suction portion 402 through which the cooling medium discharged from the discharge portion 401 is sucked in and recovered.

The discharge portion 401 and the suction portion 402 of the cooling device 400 may be disposed on the inside surface of the door member 300. Here, the 'inside surface' of the door member 300 may refer to the surface that faces the internal space of the housing 200 when the door member 300 is closed.

For example, as shown in FIG. 2, the cooling device 400 may be coupled to the door member 300 so that the discharge portion 401 and the suction portion 402 are located inside the door member 300. As the door member 300 is closed, the discharge portion 401 and the suction portion 402 may be naturally arranged to face the battery module 100 accommodated in the internal space of the housing 200.

In the cooling device 400, the discharge portion 401 and the suction portion 402 may be arranged in an up and down direction (Z-axis direction). For example, the discharge portion 401 through which the cooling medium is discharged may be disposed at a bottom end of the cooling device 400, and the suction portion 402 in which the cooling medium is sucked may be disposed at a top end of the cooling device 400. The temperature of the cold cooling medium discharged from the discharge portion 401 gradually rises through heat exchange with the battery module 100 and the cold cooling medium flows upward, and thus, an efficient cooling flow may be implemented inside the housing 200 through the suction portion 402 disposed at the top end of the discharge portion 401.

According to some embodiments, the cooling device 400 of the energy storage device 10 may be disposed to face the battery module 100 inside the housing 200. Accordingly, the cold cooling medium may be supplied directly to the battery module 100 from the cooling device 400, which may increase the cooling efficiency compared to a case where the cooling device 400 is disposed outside the housing 200.

The energy storage device 10 may further include a guide portion 230 capable of guiding the flow of the cooling medium discharged from the cooling device 400 into the inside of the housing 200. For example, referring to FIG. 2, at least a portion of the guide portion 230 may have a plate shape so that the guide portion 230 may be disposed on a rear surface of the cooling device 400.

The guide portion 230 may be configured to guide a flow path of the cooling medium. For example, the guide portion 230 may be disposed between the cooling device 400 and the battery module 100 to block the cold cooling medium discharged from the discharge portion 401 from flowing directly into the suction portion 402. Accordingly, a flow direction of the cold cooling medium discharged from the discharge portion 401 may be guided toward the battery module 100.

One surface of the guide portion 230 may be disposed to face the suction portion 402, and the other surface opposite to the one surface may be disposed to face a part of the battery module 100.

When a direction in which the cooling device 400 and the battery module 100 face each other is defined as the first direction (Y-axis direction), the guide portion 230 may be disposed to be inclined with respect to the first direction (Y-axis direction). For example, referring to FIG. 2, as the door member 300 is closed, the cooling device 400 coupled to the door member 300 may face at least a portion of the battery module 100 in the first direction (Y-axis direction), and the guide portion 230 may be installed in front of the battery module 100 so that at least a portion of the guide portion 230 may be inclined in the first direction (Y-axis direction).

Referring to FIG. 2, the guide portion 230 may be disposed to be inclined so that a bottom edge is closer to the door member 300 than a top edge. In this case, the bottom edge of the guide portion 230 may be disposed adjacent to the cooling device 400 as the door member 300 is closed.

The energy storage device 10 may further include an auxiliary guide portion 410 disposed on the door member 300. The auxiliary guide portion 410 may be configured to guide the flow of the cooling medium together with the guide portion 230.

For example, referring to FIG. 2, the auxiliary guide portion 410 may be disposed to extend horizontally from one side of the cooling device 400, and to come into contact with an end of the guide portion 230 as the door member 300 is closed. The auxiliary guide portion 410 may block the cooling medium from flowing into a gap between the guide portion 230 and the inner surface of the door member 300. Accordingly, it is possible to more reliably block the cold cooling medium discharged from the discharge portion 401 from flowing directly toward the suction portion 402.

According to some embodiments, the auxiliary guide portion 410 may be disposed on one side of the cooling device 400. For example, referring to FIG. 2, the cooling device 400 may be disposed to protrude to a certain thickness inside the door member 300, and the auxiliary guide portion 410 may be disposed on both sides of the cooling device 400 to block the cooling medium from flowing into the gap between the guide portion 230 and the door member 300.

With respect to a height direction (e.g., Z-axis direction) of the housing 200, the auxiliary guide portion 410 may be disposed between the discharge portion 401 and the suction portion 402 of the cooling device 400.

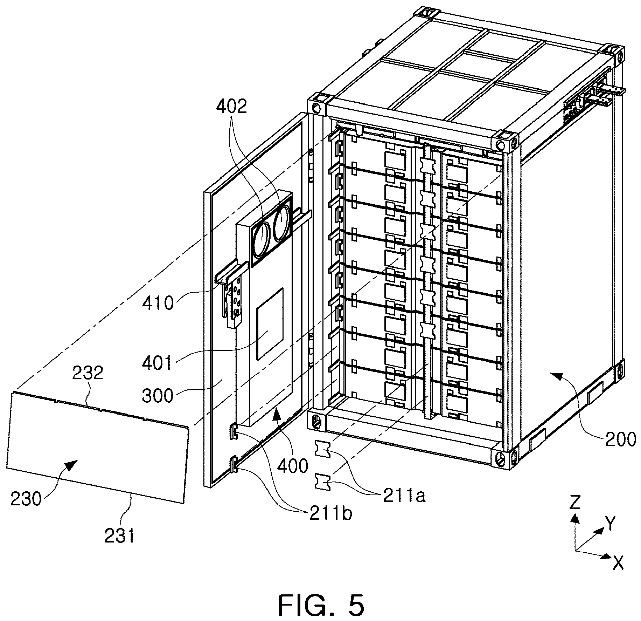

FIG. 4 shows the battery module 100 which is to be inserted into an internal space S of the energy storage device 10 according to an embodiment of the present disclosure. FIG. 5 shows the guide portion 230 and the fixing member 211 of the energy storage device 10 which are coupled to each other according to an embodiment of the present disclosure.

The energy storage device 10 described with reference to FIGS. 4 and 5 corresponds to the energy storage device 10 previously described in FIGS. 1 and 2, and thus, redundant descriptions thereof may be omitted.

The battery module 100 may be inserted into the mounting portion 210 disposed inside the housing 200 and accommodated in the internal space S. The mounting portion 210 may have a rail shape extending from the inside of the housing 200 in one direction (e.g., the Y-axis direction) and be configured so that at least a portion of the battery module 100 may be mounted thereon.

For example, referring to FIGS. 4 and 5, the mounting portion 210 may be disposed to extend in the first direction (e.g., Y-axis direction) inside the housing 200, and accordingly, the battery module 100 may be inserted into the mounting portion 210 in the first direction (Y-axis direction) . However, an insertion direction of the battery module 100 is not limited thereto. For example, the mounting portion 210 of the housing 200 may be disposed to be inclined with respect to the first direction (Y-axis direction), and accordingly, the battery module 100 may also be inserted in a direction inclined with respect to the first direction (Y-axis direction).

Inside the housing 200, the battery modules 100 may be accommodated in a plurality of columns. For example, FIG. 4 shows the battery module 100 configured to be arranged in two columns. The housing 200 may further include a partition 204 partitioning the internal space S, and the mounting portions 210 may be disposed on both sides of the partition 204 so that the battery module 100 may be mounted thereon.

The battery modules 100 may be supported by the mounting portions 210 and arranged in layers in the height direction (e.g., Z-axis direction).

In a process of accommodating the battery module 100 in the mounting portion 210, the fixing member 211 fixing the battery module 100 and the mounting portion 210 to each other may be assembled together with the battery module 100. For example, the second fixing members 211b may be coupled to the side frame 203 of the housing 200 and the battery module 100, respectively, and the first fixing members 211a may be connected to both the partition 204 and the battery modules 100.

The first fixing members 211a and the second fixing members 211b may each be provided in a plurality and arranged side by side in an arrangement direction of the battery module 100.

The fixing member 211 may fix the battery module 100 not to be separated from the mounting portion 210 in a process of transporting the energy storage device 10.

The guide portion 230 may be coupled to the housing 200 to be inclined with respect to the first direction (Y-axis direction) while the battery module 100 is completely accommodated inside the mounting portion 210. However, an assembling order of the guide portion 230 is not limited thereto. For example, the guide portion 230 may be coupled to the housing 200 at the same time as the battery module 100 is accommodated and fixed. Alternatively, the guide portion 230 may be rotatably coupled to the housing 200 with a top edge as an axis. In this case, the battery module 100 may be inserted and assembled with a space secured for insertion of the battery module 100 by rotating the guide portion 230 upward.

According to some embodiments, the guide portion 230 may be disposed such that one edge is adjacent to the inner frame 220 (also referred to as internal frame). The internal frame 220 is a plate-shaped member fixed to the housing 200 at a top portion of the battery module 100, and may face the battery module 100 in the up and down direction (e.g., Z-axis direction) . A battery control system of the energy storage device 10 may be disposed on a top surface of the internal frame 220.

Referring to FIGS. 4 and 5, a first edge 231 of the guide portion 230 may be disposed adjacent to the cooling device 400 while the door member 300 is closed, and a second edge 232 opposite to the first edge 231 may be coupled to be adjacent to the inner frame 220.

While the door member 300 is closed, the first edge 231 of the guide portion 230 may be disposed between the discharge portion 401 and the suction portion 402 of the cooling device 400. In addition, the first edge 231 of the guide portion 230 may be disposed adj acent to an end of the auxiliary guide portion 410 disposed on at least one side of the cooling device 400.

The guide portion 230 may be disposed to be inclined with respect to the first direction (Y-axis direction). That is, the first edge 231 of the guide portion 230 may be disposed closer to the door member 300 than the second edge 232.

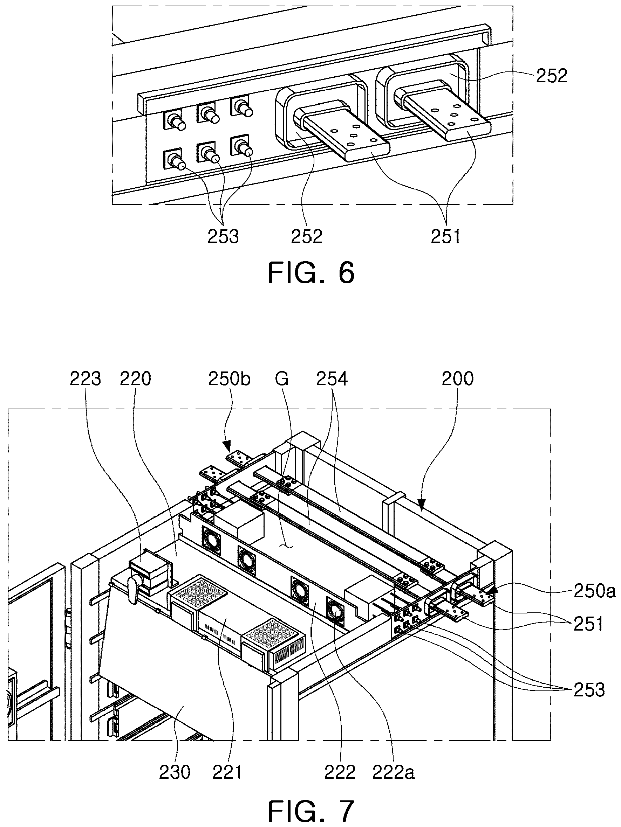

Hereinafter, with reference to FIGS. 6 to 8, the connecting portion 250 of the energy storage device 10 will be described in more detail.

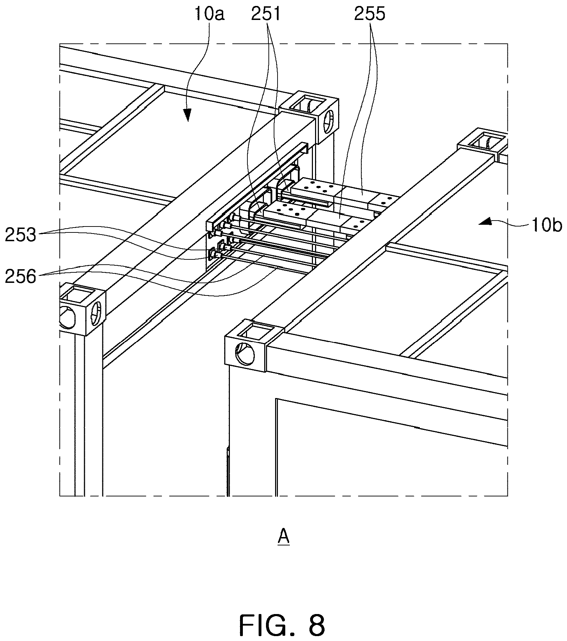

FIG. 6 is a partial enlarged view of the connecting portion 250 of the energy storage device 10 according to an embodiment of the present disclosure. FIG. 7 shows the top portion of the internal frame 220 in the energy storage device 10 according to an embodiment of the present disclosure. FIG. 8 shows a plurality of energy storage devices 10a and 10b electrically connected to each other according to an embodiment of the present disclosure.

The energy storage device 10 described with reference to FIGS. 6 to 8 corresponds to the energy storage device 10 previously described with reference to FIGS. 1 to 5, and thus, redundant descriptions may be omitted.

The energy storage device 10 may be electrically connected to another energy storage device through the connecting portion 250.

One connecting portion 250 may include one or more first connection members 251 electrically connected to the plurality of battery modules 100 and an insulating member 252 coupled to the housing 200 and supporting the first connection member 251.

The first connection member 251 includes a conductive material (e.g., metal) and may function as a type of high voltage connector (or high voltage terminal) connected to the plurality of battery modules 100. For example, the first connection member 251 may be configured as a power terminal electrically connected to the plurality of battery modules 100.

The first connection member 251 may have a shape of a bar extending in one direction. For example, the first connection member 251 may be a busbar including a conductive material. The first connection member 251 may be configured to have one end inserted in the housing 200 and the other end, opposite to the one end, extending outside of the housing 200.

While the first connection member 251 is inserted into the housing 200, at least a portion of the first connection member 251 may protrude outwardly from the housing 200. At this time, a direction in which the first connection member 251 protrudes outward from the housing 200 may be the third direction (X-axis direction) perpendicular to the first direction (Y-axis direction) which is a direction in which the battery module 100 is inserted into the mounting portion 210.

The first connection member 251 may be fixed to the housing 200 while being supported by the insulating member 252. The insulating member 252 may be configured to surround at least a portion of the first connection member 251. The insulating member 252 may include a non-conductive material (e.g. , plastic) to block the first connection member 251 from being electrically short-circuited with the housing 200.

The connecting portion 250 may further include a second connection member 253 disposed spaced apart from the first connection member 251.

The second connection member 253 may perform a different role from the first connection member 251. For example, the second connection member 253 may be configured as a low voltage connector (or low voltage terminal) and used by the energy storage device 10 to transmit and receive signals with an external device. Alternatively, when the first connection member 251 is used as a direct current connection terminal, the second connection member 253 may be used as an alternating current connection terminal or an auxiliary power terminal.

In each of the energy storage devices 10, the connecting portion 250 may be provided in a plurality. For example, referring to FIG. 7, the connecting portion 250 may include the first connecting portion 250a and the second connecting portion 250b respectively disposed on opposite surfaces of the housing 200. Also, as an example, as illustrated in the embodiment of FIG.1 and FIG. 7, each of the first and second connection portions 250a and 250b may include two first connection members 251, and six second connection members 253.

The housing 200 may include a front surface 200a, a rear surface 200b, a plurality of side surfaces 200c and 200d and a bottom surface 200e. When the door member 300 is disposed on a front surface of the housing 200, the first connecting portion 250a and the second connecting portion 250b may be disposed on both sides of the housing 200 to avoid interference with the door member 300 when opening and closing the door member 300.

With respect to the height direction (e.g., Z-axis direction) of the housing 200, the first connecting portion 250a and the second connecting portion 250b may be disposed between the top frame 201 of the housing 200 and the battery module 100.

Any one connecting portion 250 may include a plurality of first connection members 251. For example, the first connecting portion 250a disposed on one side surface of the housing 200 and the second connecting portion 250b disposed on the other side surface of the housing 200 may each include the plurality of first connection members 251.

In any one connecting portion 250, the plurality of first connection members 251 may have different polarities. For example, the first connecting portion 250a may include a pair of first connection members 251 corresponding to a positive electrode and a negative electrode.

In any one energy storage device 10, the first connection member 251 of the first connecting portion 250a and the first connection member 251 of the second connecting portion 250b may be configured to protrude in opposite directions. According to such a structure, the first connecting portion 250a of any one energy storage device 10 may be disposed to face the second connecting portion 250b of another neighboring energy storage device 10, and thus, the ease of connection between energy storage devices 10 may be increased.

The energy storage device 10 may further include a third connection member 254 electrically connecting the first connecting portion 250a and the second connecting portion 250b to each other. For example, the third connection member 254 may be configured to electrically connect a busbar of the first connecting portion 250a to a busbar of the second connecting portion 250b.

The third connection member 254 may be an internal connection member disposed inside the housing 200. For example, the third connection member 254 may be disposed between the top frame 201 and the inner frame 220 of the housing 200.

The third connection member 254 may be formed of the same material as the first connection member 251. For example, the third connection member 254 may be a busbar including a conductive material.

At least a portion of the third connection member 254 may contact the first connection member 251 in the height direction (Z-axis direction) of the housing 200 so that the third connection member 254 may be connected to the first connection member 251. The first connection member 251 and the third connection member 254 may be mechanically fastened to each other or joined by welding, etc. and electrically connected to each other.

Referring to FIG. 7, the housing 200 may further include the internal frame 220 disposed on a top portion of the battery module 100. FIG. 7 may be a partially enlarged view of the housing 200 with the top frame 201 omitted.

A separation space G in which various components electrically connected to the battery module 100 may be disposed may be formed between the inner frame 220 and a top surface of the housing 200.

The connecting portion 250 may be disposed on a top portion of the internal frame 220. The connecting portion 250 may be separated from a space where the battery module 100 is disposed, thereby preventing hazardous elements such as heat, gas, or flame generated from the battery module 100 from directly contacting the connecting portion 250.

In addition, a battery control system 221, a blocking portion 223, and a circulation system 222 may be disposed on the top portion of the internal frame 220.

The battery control system 221 may include a battery management system (BMS) module, and a battery protection unit (BPU) module. The battery control system 221 may be seated and assembled on the internal frame 220 to safely control the battery modules 100 disposed on a bottom portion of the internal frame 220.

The blocking portion 223 may serve as a switch to block the energy storage device 10 from outputting power.

The circulation system 222 may guide a flow direction of a cooling medium inside the separation space G. For example, the circulation system 222 may include one or more circulation fans 222a to guide the cooling medium introduced into the separation space G to flow from the rear of the housing 200 toward the front. The cooling medium may cool the connecting portion 250, the battery control system 221, the circulation system 222, and the blocking portion 223 while flowing inside the separation space G.

However, positions of the battery control system 221, the circulation system 222, the blocking portion 223, and the connecting portion 250 are not limited to those shown in the drawing. The above components may be disposed at any locations where interference does not occur with other components of the energy storage device 10. For example, at least one of the first connecting portion 250a and the second connecting portion 250b may be disposed on a rear surface of the housing 200, and the third connection member 254 may be disposed at an appropriate position inside the housing 200 to connect the first connecting portion 250a and the second connecting portion 250b.

At least one of the battery control system 221, the circulation system 222, and the blocking portion 223 may be electrically connected to an external device through the second connecting portion 250b to receive power. Alternatively, at least one of the battery control system 221, the circulation system 222, and the blocking portion 223 may be electrically connected to an external device through the second connecting portion 250b to exchange signal information.

The energy storage device 10 may be electrically connected to another energy storage device through the connecting portion 250.

FIG. 8 is an enlarged view of part A of FIG. 1. Referring to FIG. 8, the first energy storage device 10a and the second energy storage device 10b may be electrically connected to each other through a fourth connection member 255 connected to the first connection member 251 and a fifth connection member 256 connected to the second connection member 253.

The first energy storage device 10a and the second energy storage device 10b may be arranged to face each other in one direction (e.g., X-axis direction). In this case, the first connection member 251 of the first energy storage device 10a and the first connection member 251 of the second energy storage device 10b may face each other in the one direction (X-axis direction).

The fourth connection member 255 may electrically connect the first connection member 251 of the first energy storage device 10a and the first connection member 251 of the second energy storage device 10b to each other.

The fourth connection member 255 may be disposed outside the housing 200. That is, the fourth connection member 255 may be an external connection member connecting the first energy storage device 10a to the second energy storage device 10b outside the housing 200.

The fourth connection member 255 may include a conductive material (e.g., metal). For example, the fourth connection member 255 may be a busbar including the conductive material. At least a portion of the fourth connection member 255 may contact each of the first connection member 251 of the first energy storage device 10a and the first connection member 251 of the second energy storage device 10b so that the fourth connection member 255 may be electrically connected to the first connection member 251 of the first energy storage device 10a and the first connection member 251 of the second energy storage device 10b.

In the first energy storage device 10a and the second energy storage device 10b, the first connection member 251 may be a high voltage connector. In this case, the fourth connection member 255 may perform a function of a power connection line of the first energy storage device 10a and the second energy storage device 10b.

The fifth connection member 256 may electrically connect the second connection member 253 of the first energy storage device 10a and the second connection member 253 of the second energy storage device 10b to each other.

In the first energy storage device 10a and the second energy storage device 10b, the second connection member 253 may be a low voltage connector. In this case, the fifth connection member 256 may be a path through which signals are transmitted and received between the first energy storage device 10a and the second energy storage device 10b.

A user (or manufacturer) may appropriately arrange the plurality of previously manufactured energy storage devices 10a and 10b at the destination and then connect the connecting portion 250 to each other by using the fourth connection member 255 or the fifth connection member 256, thereby simply and quickly implementing a large capacity of energy source.

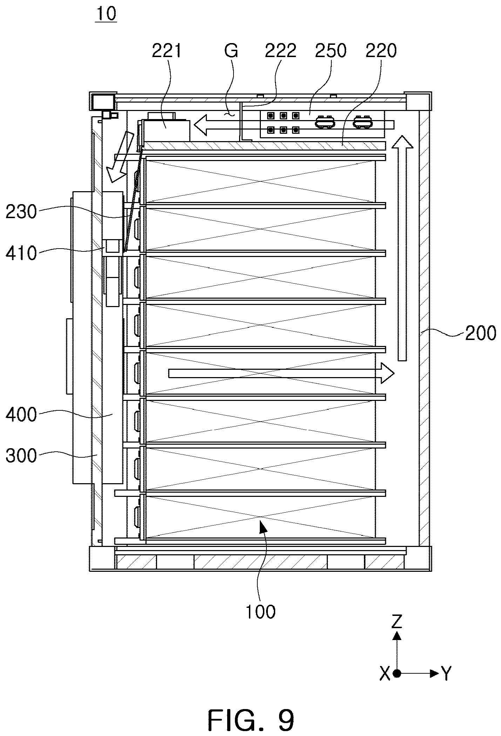

Hereinafter, the flow of the cooling medium inside the housing 200 is described with reference to FIG. 9.

FIG. 9 shows a cooling medium which is circulated inside an energy storage device according to an embodiment of the present disclosure.

The energy storage device described with reference to FIG. 9 corresponds to the energy storage device previously described with reference to FIGS. 1 to 8, and thus, redundant descriptions thereof may be omitted.

In FIG. 9, an arrow displayed inside the housing 200 indicates a flow direction of the cooling medium inside the housing 200.

The cooling medium discharged from the discharge portion (401 in FIG. 2) may flow toward the battery module 100. At this time, the guide portion 230 installed in front of the battery module 100 may block the cooling medium from flowing straight upward and being introduced into the suction portion (402 in FIG. 2) before flowing between the battery modules 100.

The auxiliary guide portion 410 disposed on at least one side of the cooling device 400 may contact the guide portion 230 to more reliably block the cooling medium from flowing in a gap between an inner surface of the door member 300 and the guide portion 230.

The cooling medium may cool the battery module 100 while passing between the battery modules 100 and flowing toward the rear of the housing 200. The cooling medium having the temperature risen due to heat exchange with the battery module 100 may flow upward and then flow into the suction portion (402 in FIG. 2) of the cooling device 400 along the separation space G between the inner frame 220 and a top portion of the housing 200.

The circulation system 222 disposed on the internal frame 220 may guide the cooling medium inside the separation space G to flow smoothly toward the front of the housing 200.

The cooling medium may cool the battery control system 221 and the connecting portion 250 disposed on the top portion of the internal frame 220 while flowing through the separation space G. That is, the cooling medium discharged from the discharge portion (401 in FIG. 2) may firstly cool the battery module 100 while circulating inside the housing 200, and then secondarily cool the battery control system 221 and the connecting portion 250.

The guide portion 230 may physically separate a flow space of the cooling medium in front of the battery module 100 and guide the cooling medium to flow intensively toward the battery module 100.

Accordingly, it is possible to prevent cooling performance from deteriorating due to the cooling medium flowing indiscriminately in front of the battery module 100 before the cooling medium reaches the battery module 100.

In addition, the guide portion 230 may guide the cooling medium to flow in a certain direction and block the cold cooling medium discharged from the discharge portion (401 in FIG. 2) from mixing with a hot cooling medium that has exchanged heat with the battery module 100, thereby preventing the cooling efficiency from decreasing.

In addition, the discharge portion 401 of the cooling device 400 is located below the suction portion 402, thereby implementing the circulation flow of the above-described cooling medium more naturally.

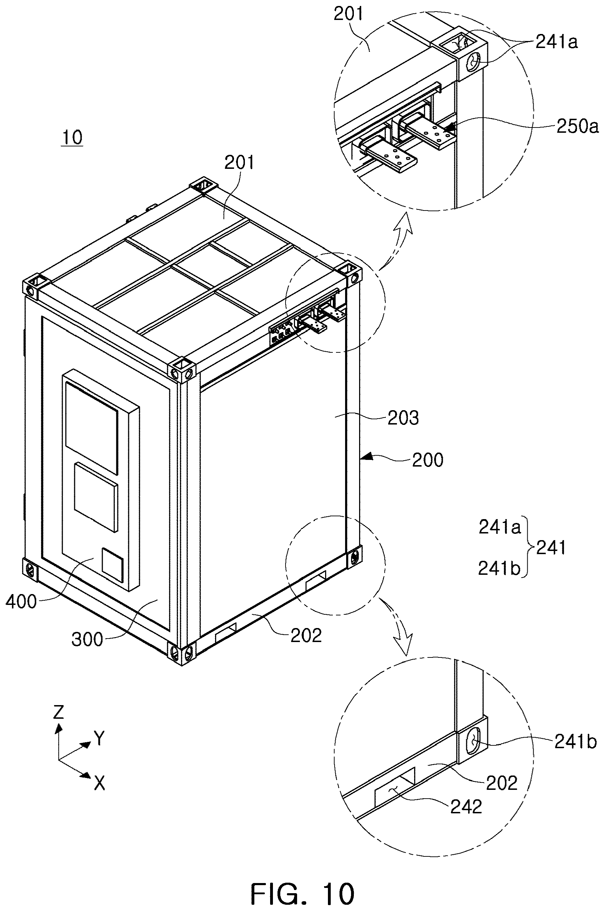

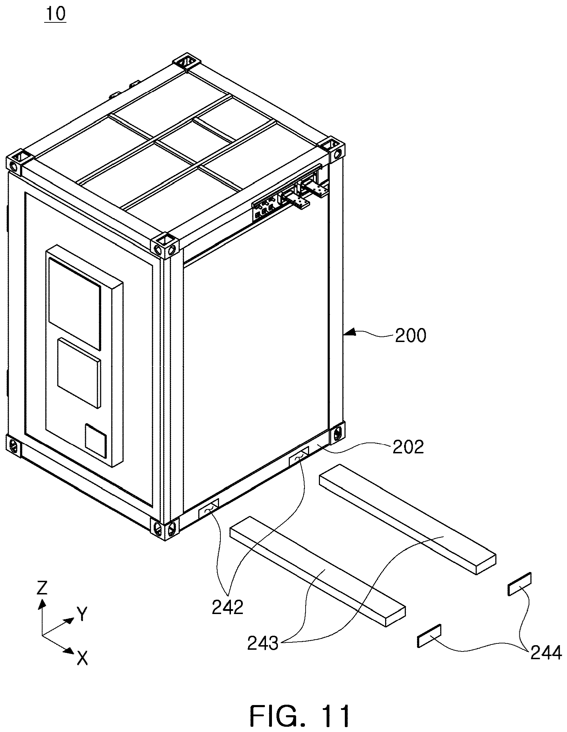

Hereinafter, a configuration for moving the energy storage device 10 will be described with reference to FIGS. 10 and 11.

FIGS. 10 and 11 are perspective views of the energy storage device 10 according to an embodiment of the present disclosure.

The energy storage device 10 described with reference to FIGS. 10 and 11 corresponds to the energy storage device 10 previously described with reference to FIGS. 1 to 9, and thus, redundant descriptions thereof may be omitted.

The energy storage device 10 that has been completely manufactured may be picked up by a transport device (e.g., a forklift or crane) and transported to an installation destination.

The housing 200 of the energy storage device 10 may include a plurality of lifting holes 241 and 242 to enable transportation by the transport device. For example, the first lifting hole 241 may be provided in a top portion or a bottom portion of the housing 200 so that the energy storage device 10 may be picked up by a crane, etc. Alternatively, a second lifting hole 242 may be provided in the bottom portion of the housing 200 so that a fork, such as a forklift, may be inserted.

The first lifting hole 241 may be provided in the shape of a hole into which a tong or hook of the crane may be inserted. For example, as shown in FIG. 10, the first lifting hole 241 may be disposed at a corner of the top frame 201 or a corner of the bottom frame 202 and may be provided in the shape of the hole that opens upward or to the side.

The second lifting hole 242 may be a hole provided in a bottom portion of the housing 200 into which the fork of a forklift may be inserted. For example, as shown in FIG. 10, a plurality of second lifting holes 242 configured to allow the fork of the forklift to be inserted may be provided in one surface of the bottom frame 202.

In order to prevent the transport device from colliding with an air conditioning device of the door member 300, the second lifting hole 242 may be provided on a side surface where the door member 300 is not disposed. For example, referring to FIG. 10, the door member 300 with the cooling device 400 installed may be disposed on one side of the housing 200, and the second lifting hole 242 may be installed in a bottom portion of the other side adjacent to the one side of the housing 200.

Referring to FIG. 11, after the energy storage device 10 is installed at the desired location, the second lifting hole 242 may be closed by mounting an insulator 243 and a cover 244 in the second lifting hole 242. The insulator 243 may be inserted into a bottom portion of the energy storage device 10 to thermally and structurally protect the battery module 100 inside the housing 200.

The energy storage device 10 according to the embodiments may be modularized to be transported in a completely manufactured state, thereby quickly implementing the ESS 1 at the installation destination.

In addition, the energy storage device 10 may be easily connected to another neighboring energy storage device 10 through the connecting portion 250 disposed on one side of the housing 200. Accordingly, when configuring the ESS 1, the plurality of energy storage devices 10 may be quickly and accurately connected to each other, and thus, the efficiency and speed of work may be increased.

The ESS according to embodiments may quickly implement a large capacity of energy source at the installation destination.

In addition, the ESS according to embodiments may quickly and accurately connect a plurality of energy storage devices to each other.

Although various embodiments of the present disclosure have been described in detail above, the scope of the present disclosure is not limited thereto, and it will be obvious to persons with ordinary knowledge in the relevant technical field that various modifications and variations are possible without departing from the technical concepts of the present invention. In addition, the above-described embodiments may be embodied by deleting some components and may be embodied in combination with each other.

## Claims

1. An energy storage device (10, 10a, 10b) comprising:
a housing (200) having an internal space;
a plurality of battery modules (100) accommodated in the internal space;
a mounting portion (210) disposed in the housing (200) and on which the plurality of battery modules (100) are mounted;
a door member (300) coupled to the housing (200) to be openable and closable; and
at least one connecting portion (250, 250a, 250b) of which at least a portion is exposed to the outside of the housing (200) and electrically connected to the plurality of battery modules (100) .

2. The energy storage device (10, 10a, 10b) of claim 1, wherein the at least one connecting portion (250, 250a, 250b) includes
a busbar electrically connected to the plurality of battery modules (100); and
an insulating member (252) coupled to the housing (200) and supporting the busbar.

3. The energy storage device (10, 10a, 10b) of claim 2, wherein the busbar has a state in which one end thereof is inserted into an inside of the housing (200) and the other end, opposite to the one end, is exposed to the outside of the housing (200) .

4. The energy storage device (10, 10a, 10b) of claim 2 or 3, wherein
the mounting portion (210) is configured to allow the plurality of battery modules (100) to be inserted in a first direction, and
the busbar protrudes outward from the housing (200) in a second direction, perpendicular to the first direction.

5. The energy storage device (10, 10a, 10b) of any one of claims 1 to 4, wherein the at least one connecting portion (250, 250a, 250b) include a first connecting portion (250a) and a second connecting portion (250b) respectively disposed on opposite surfaces of the housing (200), and
the energy storage device (10, 10a, 10b) further comprising,
an internal connection member disposed inside the housing (200) and electrically connecting the first connecting portion (250a) and the second connecting portion (250b) to each other.

6. The energy storage device (10, 10a, 10b) any one of claims 1 to 5, wherein the housing (200) further includes a partition (204) partitioning the internal space, and the plurality of battery modules (100) are arranged in a height direction of the housing (200) on both sides of the partition (204), and
wherein the energy storage device (10, 10a, 10b) further comprises,
a plurality of fixing members (211a, 211b) coupled to the housing (200) and the plurality of battery modules (100) to prevent the plurality of battery modules (100) from being separated from the mounting portion (210), and
a plurality of lifting holes (241, 242) provided in the housing (200) and configured to allow a transport device to be inserted.

7. The energy storage device (10, 10a, 10b) of claim 6, wherein the plurality of lifting holes (241, 242) include
a plurality of first lifting holes disposed at corners of the housing (200); and
a plurality of second lifting holes (242) disposed in a bottom portion of the housing (200).

8. The energy storage device (10, 10a, 10b) any one of claims 1 to 7, further comprising:
an internal frame (220) disposed on top portions of the plurality of battery modules (100); and
a battery control system (221) disposed between the internal frame (220) and the housing (200).

9. The energy storage device (10, 10a, 10b) of claim 8, wherein at least a portion of the connecting portion (250, 250a, 250b) is disposed between the internal frame (220) and the housing (200).

10. The energy storage device (10, 10a, 10b) any one of claims 1 to 9, further comprising,
a cooling device (400) disposed in the door member (300) and configured to supply a cooling medium to the internal space.

11. The energy storage device (10, 10a, 10b) any one of claims 1 to 10, wherein the at least one connecting portion (250, 250a, 250b) includes a first connection member (251) and a second connection member (253) arranged spaced apart from each other,
the first connection member (251) is a high voltage terminal electrically connected to the plurality of battery modules (100), and
the second connection member (253) is a low voltage terminal electrically connected to a battery control system (221) configured to control the plurality of battery modules (100) .

12. An energy storage system (ESS) comprising:
a plurality of energy storage devices (10, 10a, 10b) respectively including a plurality of battery modules (100); and
at least one connection member (251, 253-256) electrically connecting the plurality of energy storage devices (10, 10a, 10b) to each other,
wherein at least one of the plurality of energy storage devices (10, 10a, 10b) comprises
a housing (200) having a mounting portion (210) on which the plurality of battery modules (100) are mounted;
a door member (300) coupled to the housing (200) to be openable and closable; and
at least one connecting portion (250, 250a, 250b) of which at least a portion is exposed to the outside of the housing (200) and electrically connected to the plurality of battery modules (100) .

13. The energy storage device (10, 10a, 10b) of claim 12, wherein
the at least one connecting portion (250, 250a, 250b) includes a busbar electrically connected to the plurality of battery modules (100) and protruding outwardly from the housing (200), and
the connection member (251, 253-256) is respectively connected to busbars of two neighboring energy storage devices (10, 10a, 10b).

14. The energy storage device (10, 10a, 10b) of claim 12 or 13, wherein
the plurality of energy storage devices (10, 10a, 10b) include a first energy storage device (10a) and a second energy storage device (10b) arranged side by side in one direction, and
a connecting portion (250, 250a, 250b) of the first energy storage device (10a) and a connecting portion (250, 250a, 250b) of the second energy storage device (10b) face each other in the one direction.

15. The energy storage device (10, 10a, 10b) any one of claims 12 to 14, wherein at least one of the plurality of energy storage devices (10, 10a, 10b) further includes a battery control system (221) configured to control the plurality of battery modules (100), and
the at least one connecting portion (250, 250a, 250b) includes a high voltage terminal electrically connected to the plurality of battery modules (100) and a low voltage terminal electrically connected to the battery control system (221).
